# EUROPEAN PATENT APPLICATION

(11) **EP 4 632 664 A1**
(43) Date of publication of application: **15.10.2025**
(21) Application number: 24744330.2
(22) Date of filing: 17.01.2024
(51) Int. Cl.: G06T 3/40, G06N 3/04, G06T 5/00

(54) **IMAGE PROCESSING METHOD AND APPARATUS, AND DEVICE AND MEDIUM**

(30) Priority: 17.01.2023 CN 202310090705
(71) Applicant: Zhejiang Pixfra Technology Co., Ltd., Hangzhou, Zhejiang 311215 (CN)
(72) Inventor: LIU, Quankai, Hangzhou, Zhejiang 311215 (CN); LU, Wuping, Hangzhou, Zhejiang 311215 (CN); LI, Jun, Hangzhou, Zhejiang 311215 (CN); CHEN, Hongyu, Hangzhou, Zhejiang 311215 (CN); GAO, Yuan, Hangzhou, Zhejiang 311215 (CN); CHEN, Zhenxin, Hangzhou, Zhejiang 311215 (CN)
(74) Representative: Wang, Bo
(86) International application number: PCT/CN2024/072880
(87) International publication number: WO 2024/153156

(57) **Abstract**

Disclosed in the present invention are an image processing method and apparatus, and a device and a medium. **In** the present invention, target images to be processed are acquired; convolution processing is performed on inputted target images on the basis of a convolutional layer of a pre-trained hybrid attention super-resolution network model, so as to obtain shallow feature maps; and by means of a set number of attention residual layers which are connected in series in the model, perception processing is performed on the shallow feature maps sequentially by means of the attention residual layers. A deeper network is constructed by the set number of attention residual layers that are connected in series, such that the model pays more attention to detail regions in an image, and the deeper network can accurately extract deep feature maps of detail features. Pixel values of pixel points in corresponding rows and columns in the deep feature maps and the shallow feature maps are added together, and are then inputted into an upsampling layer, such that an outputted high-resolution image having enhanced details is obtained, thereby solving the problem of inaccurate feature extraction of a fuzzy detail region in a thermal imaging image.

## Description

### CROSS-REFERENCE TO RELATED APPLICATIONS

This application claims priority to Chinese Patent Application No. 202310090705.6, filed on January 17, 2023, the entire contents of which are hereby incorporated by reference.

### TECHNICAL FIELD

The present disclosure relates to the field of image processing technologies, and in particular, to an image processing method, device, electronic device, and medium.

### BACKGROUND

Due to limitations imposed by hardware and cost, thermal imaging images typically have low resolution and insufficiently prominent details. Super-resolution reconstruction can improve the resolution and quality of the images, which can alleviate problems of low resolution and insufficiently prominent details.

However, because the thermal imaging image has less detailed information compared to a visible light image, it is difficult to distinguish between a detailed region and a smooth region in the thermal imaging image. Moreover, when there is a large temperature difference between a target and the surrounding environment, feature extraction in the detailed region are more inaccurate. As a result, after a super-resolution reconstruction is performed on the thermal imaging image using a super-resolution network model, black-and-white edge artifacts may appear in the detailed region of the super-resolution reconstructed image.

Therefore, how to solve the issue of inaccurate feature extraction in blurred detail regions of thermal imaging images, which leads to black-and-white edge artifacts in super-resolution reconstructed images, has become a pressing technical challenge that urgently needs to be addressed.

### SUMMARY

The present disclosure provides an image processing method, device, electronic device, and medium, which are configured to solve the issue of inaccurate feature extraction in blurred detail regions of thermal imaging images, which leads to black-and-white edge artifacts in super-resolution reconstructed images in the related art.

The present disclosure provides an image processing method, wherein the method comprises:
obtaining a target image to be processed; performing, via a convolutional layer of a trained hybrid attention super-resolution network model, convolutional processing on the target image to obtain a shallow feature map;
sequentially performing perceptual processing on the shallow feature map via each attention residual layer of a plurality of serially connected attention residual layers in the trained hybrid attention super-resolution network model to obtain a deep feature map output by the last attention residual layer; performing an element-wise addition on corresponding pixels of the shallow feature map and the deep feature map via a target residual addition layer of the hybrid attention super-resolution network model to obtain a target feature map; and obtaining a detail-enhanced high-resolution image by inputting the target feature map into an upsampling layer of the hybrid attention super-resolution network model.

Further, the sequentially performing perceptual processing on the shallow feature map via each attention residual layer of a plurality of serially connected attention residual layers in the trained hybrid attention super-resolution network model to obtain a deep feature map output by the last attention residual layer includes:
for each attention residual layer of the hybrid attention super-resolution network model, in response to determining that the attention residual layer is the first attention residual layer, designating the shallow feature map as a first input feature map of the first attention residual layer and inputting the first input feature map into the first attention residual layer; or in response to determining that the attention residual layer is not the first attention residual layer, designating an output feature map outputted by a previous attention residual layer as the first input feature map of the attention residual layer and inputting the first input feature map into the attention residual layer; performing the perceptual processing on the first input feature map via an attention layer of the attention residual layer to obtain a target attention feature map outputted by the attention layer; and performing, via a residual addition layer of the of the attention residual layer, an element-wise addition on corresponding pixels of the target attention feature map and the first input feature map to obtain an output feature map of the attention residual layer, and designating an output feature map of the last attention residual layer as the deep feature map.

Further, the performing the perceptual processing on the first input feature map via an attention layer of the attention residual layer to obtain a target attention feature map of the attention layer includes:
via a processing unit of the attention layer of the attention residual layer and based on a pixel value of each pixel point in the first input feature map and a local binary pattern (LBP) sampling function in the attention layer, inputting the pixel value of each pixel point into the LBP sampling function to obtain a LBP feature value matrix and storing the LBP feature value matrix into the attention layer;
inputting the first input feature map into a first perceptron unit of the attention layer for the perceptual processing to obtain a brightness-based attention feature map; inputting the LBP feature value matrix into a second perceptron unit of the attention layer for the perceptual processing to obtain a gradient-based attention feature map; inputting the brightness-based attention feature map and the gradient-based attention feature map into a fusion layer unit of the attention layer for fusion processing to obtain a fused attention feature map; and performing, via an element-wise multiplication unit of the attention layer, element-wise multiplication processing on the fused attention feature map and the first input feature map to obtain the target attention feature map.

Further, each attention residual layer further includes a first convolutional layer, a first activation layer, a second convolutional layer, and a second activation layer; and before performing the perceptual processing on the first input feature map via an attention layer of the attention residual layer to obtain a target attention feature map outputted by the attention layer, the method further includes:
processing the first input feature map by performing convolutional processing through the first convolutional layer, performing activation processing through the first activation layer, performing convolutional processing through the second convolutional layer, performing activation processing through the second activation layer to obtain a second input feature map; and inputting the second input feature map into the attention layer of the attention residual layer for a subsequent processing.

Correspondingly, the present disclosure provides an image processing device, wherein the device comprises:
an obtaining module configured to obtain a target image to be processed;
a processing module configured to perform, via a convolutional layer of a trained hybrid attention super-resolution network model, convolutional processing on the target image to obtain a shallow feature map; sequentially perform perceptual processing on the shallow feature map via each attention residual layer of a plurality of serially connected attention residual layers in the trained hybrid attention super-resolution network model to obtain a deep feature map output by the last attention residual layer; perform an element-wise addition on corresponding pixels of the shallow feature map and the deep feature map via a target residual addition layer of the hybrid attention super-resolution network model to obtain a target feature map; and obtain a detail-enhanced high-resolution image by inputting the target feature map into an upsampling layer of the hybrid attention super-resolution network model.

Further, the processing module is further configured to for each attention residual layer of the hybrid attention super-resolution network model, in response to determining that the attention residual layer is the first attention residual layer, designate the shallow feature map as a first input feature map of the first attention residual layer and input the first input feature map into the first attention residual layer; or in response to determining that the attention residual layer is not the first attention residual layer, designate an output feature map outputted by a previous attention residual layer as the first input feature map of the attention residual layer and input the first input feature map into the attention residual layer; perform the perceptual processing on the first input feature map via an attention layer of the attention residual layer to obtain a target attention feature map outputted by the attention layer; and perform, via a residual addition layer of the of the attention residual layer, an element-wise addition on corresponding pixels of the target attention feature map and the first input feature map to obtain an output feature map of the attention residual layer, and designate an output feature map of the last attention residual layer as the deep feature map.

Further, the processing module is further configured to via a processing unit of the attention layer of the attention residual layer and based on a pixel value of each pixel point in the first input feature map and a local binary pattern (LBP) sampling function in the attention layer, input the pixel value of each pixel point into the LBP sampling function to obtain a LBP feature value matrix and store the LBP feature value matrix into the attention layer; input the first input feature map into a first perceptron unit of the attention layer for the perceptual processing to obtain a brightness-based attention feature map; input the LBP feature value matrix into a second perceptron unit of the attention layer for the perceptual processing to obtain a gradient-based attention feature map; input the brightness-based attention feature map and the gradient-based attention feature map into a fusion layer unit of the attention layer for fusion processing to obtain a fused attention feature map; and perform, via an element-wise multiplication unit of the attention layer, element-wise multiplication processing on the fused attention feature map and the first input feature map to obtain the target attention feature map.

Further, each attention residual layer further includes afirst convolutional layer, a first activation layer, a second convolutionallayer, and a second activation layer; and the processing module is further configured to process the first input feature map by performing convolutional processing through the first convolutional layer, perform activation processing through the first activation layer, perform convolutional processing through the second convolutional layer, perform activation processing through the second activation layer to obtain a second input feature map; and input the second input feature map into the attention layer of the attention residual layer for a subsequent processing.

Correspondingly, the present disclosure provides an electronic device comprising a processor, a communication interface, a memory, and a communication bus, wherein the processor, the communication interface, and the memory accomplish communication with each other via the communication bus; and
a computer program is stored in the memory, and when the computer program is executed by the processor, causes the processor to execute the steps of the image processing method according to any one of the methods described above.

Correspondingly, the present disclosure provides a computer-readable storage medium storing a computer program, wherein when the computer program is executed by a processor, causes the processor to execute the steps of the image processing method according to any one of the methods described above

The present disclosure provides an image processing method, device, electronic device, and medium. In this disclosure, a target image to be processed is obtained. Convolutional processing is performed on the target image via a convolutional layer of a trained hybrid attention super-resolution network model to obtain a shallow feature map. The shallow feature map is sequentially subjected to perceptual processing via each attention residual layer of a plurality of serially connected attention residual layers in the trained hybrid attention super-resolution network model. Because the plurality of serially connected attention residual layers constructs a deeper network, the hybrid attention super-resolution network model focuses more on detailed regions in the image. The deeper network can accurately extract a deep feature map that includes detailed features. An element-wise addition is performed on corresponding pixels of the shallow feature map and the deep feature map, and the resulting target feature map is input into an upsampling layer to obtain a detail-enhanced high-resolution image. As such, the issue of inaccurate feature extraction in blurred detail regions of thermal imaging images is solved.

### BRIEF DESCRIPTION OF THE DRAWINGS

In order to more clearly illustrate the technical solutions in the embodiments of the present disclosure, brief introductions of the drawings required for describing the embodiments are provided below. It is apparent that the drawings described below are merely some embodiments of the present disclosure. Other drawings may also be obtained by those of ordinary skill in the art without creative efforts based on these drawings.
FIG. 1 is a schematic diagram illustrating an image processing process according to some embodiments of the present disclosure;
FIG. 2 is a schematic diagram illustrating an image processing process according to some embodiments of the present disclosure;
FIG. 3 is a schematic diagram illustrating a process for performing perceptual processing on a first input feature map via an attention layer of a hybrid attention neural network model according to some embodiments of the present disclosure;
FIG. 4 is a schematic diagram illustrating a process for obtaining an output feature map of an attention residual layer according to some embodiments of the present disclosure;
FIG. 5 is a schematic diagram illustrating a structure of an image processing device according to some embodiments of the present disclosure;
FIG. 6 is a schematic diagram illustrating a structure of an electronic device according to some embodiments of the present disclosure.

### DETAILED DESCRIPTION

In order to make the objectives, technical solutions, and advantages of the present disclosure more clearly understood, the present disclosure is described in further detail below with reference to the accompanying drawings. It is apparent that the embodiments described are only a portion of the embodiments of the present disclosure rather than all embodiments. All other embodiments obtained by those of ordinary skill in the art without creative efforts based on the embodiments of the present disclosure also fall within the scope of protection of the present disclosure.

To solve the issue of inaccurate feature extraction in blurred detail regions of thermal imaging images, which leads to black-and-white edge artifacts in super-resolution reconstructed images, the embodiments of the present disclosure provide an image processing method, device, electronic device, and medium.

### Embodiment 1:

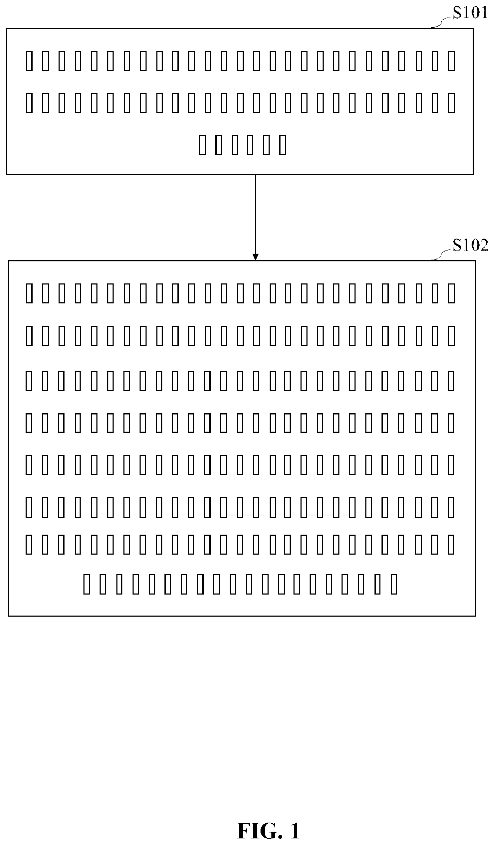

FIG. 1 is a schematic diagram illustrating an image processing process according to some embodiments of the present disclosure. The process comprises the following operations.

In S101, a target image to be processed is obtained, and convolutional processing is performed on the target image via a convolutional layer of a trained hybrid attention super-resolution network model to obtain a shallow feature map.

To solve the issue of inaccurate feature extraction in blurred detail regions of thermal imaging images, which leads to black-and-white edge artifacts in super-resolution reconstructed images, an image processing method is provided in some embodiments of the present disclosure, which is applied to an electronic device. The electronic device may be a host, a tablet, a smartphone, or another type of intelligent terminal device, or be a server. The server may be a local server or a cloud server. The embodiments of the present disclosure impose no limitation on the type of electronic device.

The electronic device obtains a target image to be processed. The target image refers to an image that needs to be processed. The target image may be a thermal imaging image or a low-resolution image with blurred detailed regions, such as an infrared image or a visible light image. The electronic device may obtain the target image to be processed in various ways. For example, the electronic device may receive the target image sent from another electronic device (e.g., a thermal imager) connected thereto, or may obtain the target image from the electronic device.

To extract the shallow feature map of the target image, the electronic device stores a trained hybrid attention super-resolution network model. The hybrid attention super-resolution network model is configured to perform a super-resolution reconstruction on a low-resolution image. A loss function of the hybrid attention super-resolution network model is defined as *L = MSE*(*lr,hr*), where *L* represents a loss value, *lr* represents a low-resolution image, *hr* represents a high-resolution image, and *MSE* denotes a mean squared error. The convolutional layer of the hybrid attention super-resolution network model is used to perform convolutional processing on the target image to obtain the shallow feature map of the target image. In some embodiments, the hybrid attention super-resolution network model is configured to perform super-resolution reconstruction on an image based on an attention mechanism. The attention mechanism is a technique in artificial neural networks that simulates cognitive attention. The attention mechanism can enhance weights of certain parts of input data of a neural network while reducing weights of other parts, thereby focusing the attention of the network on a small portion of the data that is most important. The attention mechanism may be implemented by incorporating an attention function or introducing other structures for realizing attention into the hybrid attention super-resolution network model architecture. In some embodiments, an input of the hybrid attention super-resolution network model may include the target image, and an output of the hybrid attention super-resolution network model may include a detail-enhanced high-resolution image.

In S102, perceptual processing is sequentially performed on the shallow feature map via each attention residual layer of a plurality of serially connected attention residual layers in the trained hybrid attention super-resolution network model to obtain a deep feature map output by the last attention residual layer, an element-wise addition is performed on corresponding pixels of the shallow feature map and the deep feature map via a target residual addition layer of the hybrid attention super-resolution network model to obtain a target feature map, and a detail-enhanced high-resolution image is obtained by inputting the target feature map into an upsampling layer of the hybrid attention super-resolution network model.

In some embodiments, a structure of the hybrid attention super-resolution network model is as follows. The hybrid attention super-resolution network model includes a convolutional layer, a plurality of attention residual layers, a target residual addition layer, and an upsampling layer. An output of the convolutional layer serves as an input of the plurality of attention residual layers. The output of the convolutional layer and an output of the plurality of attention residual layers serve as an input of the target residual addition layer. An output of the target residual addition layer serves as an input of the upsampling layer, and an output of the upsampling layer serves as a final output of the hybrid attention super-resolution network model.

The convolutional layer is configured to extract shallow features from the target image to obtain the shallow feature map. The input of the convolutional layer includes the target image, and the output of the convolutional layer includes the shallow feature map. The convolutional layer may include a convolutional neural network (CNN), or the like.

An attention residual layer is configured to extract deep features from a target image. The input of the attention residual layer includes a first input feature map, where the first input feature map may be the shallow feature map output by the convolutional layer or an output feature map output by a previous attention residual layer. The output of the attention residual layer includes an output feature map. The output feature map of the last attention residual layer may be referred to as the deep feature map. The attention residual layer may include a residual attention network (RAN), or the like.

In some embodiments, the sequentially performing perceptual processing on the shallow feature map via each attention residual layer of a plurality of serially connected attention residual layers in the trained hybrid attention super-resolution network model to obtain a deep feature map output by the last attention residual layer includes the following operations. For each attention residual layer of the hybrid attention super-resolution network model, in response to determining that the attention residual layer is the first attention residual layer, the shallow feature map is designated as a first input feature map of the first attention residual layer and the first input feature map is input into the first attention residual layer; or in response to determining that the attention residual layer is not the first attention residual layer, an output feature map outputted by a previous attention residual layer is designated as the first input feature map of the attention residual layer and the first input feature map is input into the attention residual layer.

The target residual addition layer is configured to perform processing on pixel values of corresponding pixels in at least two images to obtain the target feature map. In some embodiments, the target residual addition layer is configured to perform an element-wise addition on the pixel values of corresponding pixels in the at least two images. The inputs of the target residual addition layer include the shallow feature map and the deep feature map, and an output of the target residual addition layer includes the target feature map. The target residual addition layer may include a residual neural network (ResNet), or the like.

The upsampling layer is configured to enhance a resolution of an image. An input of the upsampling layer includes the target feature map, and an output of the upsampling layer includes the detail-enhanced high-resolution image. The upsampling layer may include a fully convolutional network (FCN), a convolutional network for image segmentation (U-Net), or the like.

In some embodiments, the hybrid attention super-resolution network model may be trained based on a large amount of training samples with labels. Specifically, the training samples are input into the hybrid attention super-resolution network model, and parameters of the hybrid attention super-resolution network model are updated through training.

In some embodiments, a training sample may be a sample target image. In some embodiments, a label may be a detail-enhanced high-resolution image corresponding to the sample target image. In some embodiments, the label may be obtained using super-resolution techniques such as interpolation algorithms or image reconstruction. The interpolation algorithms may include a nearest-neighbor interpolation algorithm, a bilinear interpolation algorithm, or a bicubic interpolation algorithm. The image reconstruction may include wavelet transform, or the like. In some embodiments, the convolutional layer, the attention residual layers, the target residual addition layer, and the upsampling layer may be jointly trained. A plurality of training samples may be used to train an initial convolutional layer, initial attention residual layers, an initial target residual addition layer, and an initial upsampling layer. Specifically, a sample target image is input into the initial convolutional layer to obtain a sample shallow feature map. The sample shallow feature map is input into the initial attention residual layers to obtain a sample deep feature map. The sample shallow feature map and the sample deep feature map are input into the initial target residual addition layer to obtain a sample target feature map. The sample target feature map is input into the initial upsampling layer to obtain a detail-enhanced high-resolution image corresponding to the sample target image. A loss function is constructed based on the sample target image and the corresponding detail-enhanced high-resolution image. Parameters of the initial convolutional layer, initial attention residual layers, initial target residual addition layer, and initial upsampling layer are simultaneously updated based on the loss function until a preset condition is satisfied. Trained convolutional layer, attention residual layers, target residual addition layer, and upsampling layer are thus obtained. The preset condition may include that the loss function is less than a threshold, the training is converged, or a training cycle reaches a threshold. In some embodiments, the training may be performed based on training samples using various methods. For example, the hybrid attention super-resolution network model may be trained based on a gradient descent method.

In some embodiments, during training, the loss function of the hybrid attention super-resolution network model is defined as *L = MSE*(*lr,hr*), where *L* represents a loss value, *lr* represents a sample target image (which is a low-resolution image), *hr* represents a detail-enhanced high-resolution image corresponding to the sample target image, and *MSE* denotes a mean squared error.

To extract the deep feature map of the target image, the hybrid attention super-resolution network model includes the plurality of serially connected attention residual layers after the convolutional layer. A count of the serially connected attention residual layers may be 60, 64, 62, 65, or the like. Preferably, the count is 64.

The electronic device inputs the shallow feature map output by the convolutional layer into the first attention residual layer, and sequentially performs perceptual processing via each attention residual layer. The output feature map of a previous attention residual layer is used as an input feature map of a subsequent attention residual layer, to obtain the deep feature map output by the last attention residual layer.

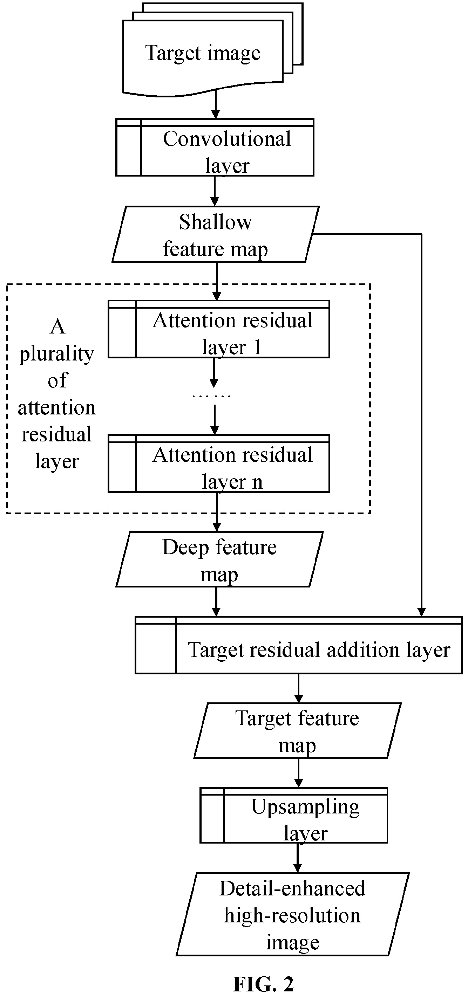

FIG. 2 is a schematic diagram illustrating an image processing process according to some embodiments of the present disclosure. As shown in FIG. 2, a target image (which is a low-resolution image) is input into a convolutional layer of a hybrid attention neural network model. A shallow feature map output by the convolutional layer is input into the first attention residual layer of n attention residual layers. Perceptual processing is sequentially performed via the n attention residual layers (where n may be 60, 64, 62, 65, or the like, and preferably 64), to obtain a deep feature map output by the last attention residual layer. The deep feature map and the shallow feature map are input into a target residual addition layer to obtain a target feature map output by the target residual addition layer. The target feature map is then input into an upsampling layer to obtain a high-resolution image output by the upsampling layer.

The shallow feature map and the deep feature map are input into the target residual addition layer. Based on pixel values of corresponding pixels in the shallow feature map and the deep feature map, an element-wise addition is performed on the pixel values of the corresponding pixels to obtain a target feature map. The target feature map is input into the upsampling layer to perform upsampling processing on the target feature image, so as to obtain the detail-enhanced high-resolution image output by the upsampling layer.

In the embodiments of the present disclosure, the target image to be processed is obtained. Convolutional processing is performed on the target image via the convolutional layer of the trained hybrid attention super-resolution network model to obtain the shallow feature map. The perceptual processing is sequentially performed on the shallow feature map via each attention residual layer of the plurality of serially connected attention residual layers in the hybrid attention super-resolution network model. Because the plurality of serially connected attention residual layers constructs a deeper network, the hybrid attention super-resolution network model focuses more on detailed regions in the image. The deeper network can accurately extract a deep feature map containing detailed features. The element-wise addition is performed on corresponding pixels of the shallow feature map and the deep feature map. The result is input into the upsampling layer to obtain the detail-enhanced high-resolution image, thereby solving the issue of inaccurate feature extraction in blurred detail regions of thermal imaging images.

### Embodiment 2:

In some embodiments, the hybrid attention super-resolution network model may include the plurality of serially connected attention residual layers. That attention residual layers are serially connected refers to using an output of a previous attention residual layer as an input of a subsequent attention residual layer.

By way of example, the count (i.e., the aforementioned n) may be 64. In this case, the hybrid attention super-resolution network model includes 64 serially connected attention residual layers, denoted as attention residual layer 1, attention residual layer 2, ..., and attention residual layer 64. The shallow feature map output by the convolutional layer is input into the attention residual layer 1 (i.e., the first attention residual layer). An output of the attention residual layer 1 is used as an input of the attention residual layer 2, ..., and an input of the attention residual layer 64 is an output of the attention residual layer 63. An output of attention residual layer 64 is used as the deep feature map.

In order to obtain the deep feature map, based on the above embodiments, in the embodiments of the present disclosure, the sequentially performing perceptual processing on the shallow feature map via each attention residual layer of the plurality of serially connected attention residual layers in the trained hybrid attention super-resolution network model to obtain the deep feature map output by the last attention residual layer includes:
For each attention residual layer of the hybrid attention super-resolution network model, in response to determining that the attention residual layer is the first attention residual layer, designating the shallow feature map as a first input feature map of the first attention residual layer and inputting the first input feature map into the first attention residual layer; or in response to determining that the attention residual layer is not the first attention residual layer, designating an output feature map outputted by a previous attention residual layer as the first input feature map of the attention residual layer and inputting the first input feature map into the attention residual layer; performing the perceptual processing on the first input feature map via an attention layer of the attention residual layer to obtain a target attention feature map outputted by the attention layer; and performing, via a residual addition layer of the of the attention residual layer, an element-wise addition on corresponding pixels of the target attention feature map and the first input feature map to obtain an output feature map of the attention residual layer, and designating an output feature map of the last attention residual layer as the deep feature map.

For each attention residual layer of the hybrid attention super-resolution network model, in response to determining that the attention residual layer is the first attention residual layer, the shallow feature map output by the convolutional layer is designated as the first input feature map of the attention residual layer and is input into the attention residual layer. In response to determining that the attention residual layer is not the first attention residual layer, an output feature map outputted by a previous attention residual layer is acquired and designated as the first input feature map of the attention residual layer.

Each attention residual layer includes an attention layer and a residual addition layer. The first input feature map is input into the attention layer of the attention residual layer. Perceptual processing is performed on the first input feature map via the attention layer to obtain a target attention feature map outputted by the attention layer. The target attention feature map and the first input feature map are input into the residual addition layer of the attention residual layer. Based on the target attention feature map and the first input feature map input into the residual addition layer of the attention residual layer, pixel values of corresponding pixels in the target attention feature map and the first input feature map are determined, and an element-wise addition is performed on the corresponding pixels of the target attention feature map and the first input feature map to obtain an output feature map of the attention residual layer. In response to determining that the attention residual layer is not the last attention residual layer, the output feature map is designated as the first input feature map of a subsequent attention residual layer. In response to determining that the attention residual layer is the last attention residual layer, the output feature map is designated as the deep feature map.

In some embodiments, each attention residual layer includes an attention layer and a residual addition layer. The attention layer is configured to process the first input feature map to obtain a target attention feature map. The residual addition layer is configured to perform an element-wise addition on pixel values of corresponding pixels in the first input feature map and the target attention feature map to obtain the output feature map. The attention layer may include a transformer model, or the like. The residual addition layer may include a residual neural network (ResNet), or the like.

In some embodiments, the attention residual layers may be classified into the first attention residual layer and non-first attention residual layers. The first attention residual layer refers to the first attention residual layer that processes the shallow feature map, and the non-first attention residual layers refer to the remaining attention residual layers other than the first attention residual layer.

The input of the attention layer of the first attention residual layer includes the shallow feature map (also referred to as the first input feature map of the current attention residual layer). An output of the attention layer of the first attention residual layer includes the target attention feature map of the first attention residual layer. The input of a residual addition layer of the first attention residual layer includes the shallow feature map and the target attention feature map. The output of the residual addition layer of the first attention residual layer includes the output feature map of the first attention residual layer.

The input of the attention layer of a non-first attention residual layer includes the output feature map outputted by a previous attention residual layer (also referred to as the first input feature map of the current attention residual layer). The output of the attention layer of the non-first attention residual layer includes the target attention feature map of the current attention residual layer. The input of the residual addition layer of the non-first attention residual layer includes the target attention feature map of the current attention residual layer and the output feature map outputted by the previous attention residual layer (also referred to as the first input feature map of the current attention residual layer). An output of the residual addition layer of the non-first attention residual layer includes an output feature map of the current attention residual layer.

In some embodiments, the output feature map outputted by the last attention residual layer may be used as the deep feature map and input into the target residual addition layer, where the last attention residual layer refers to the attention residual layer whose output feature map is to be input into the target residual addition layer for further processing.

In some embodiments of the present disclosure, by configuring the plurality of serially connected attention residual layers in the hybrid attention super-resolution network model, the hybrid attention super-resolution network model performs further extraction of deep features of the target image based on the shallow feature map extracted by the convolutional layer and the outputs of each attention residual layer. As a result, the hybrid attention super-resolution network model may focus more on detail regions in the target image, thereby accurately extracting detail features. A deeper network is constructed through residual results to effectively extract deep features, ultimately enhancing the performance of the hybrid attention super-resolution network model in detail enhancement of the target image.

### Embodiment 3:

To obtain the target attention feature map, based on the foregoing embodiments, in the embodiments of the present disclosure, performing perceptual processing on the first input feature map via the attention layer of the attention residual layer to obtain the target attention feature map of the attention layer includes:
via a processing unit of the attention layer of the attention residual layer and based on a pixel value of each pixel point in the first input feature map and a local binary pattern (LBP) sampling function in the attention layer, inputting the pixel value of each pixel point into the LBP sampling function to obtain a LBP feature value matrix and storing the LBP feature value matrix into the attention layer;
inputting the first input feature map into a first perceptron unit of the attention layer for the perceptual processing to obtain a brightness-based attention feature map; inputting the LBP feature value matrix into a second perceptron unit of the attention layer for the perceptual processing to obtain a gradient-based attention feature map; inputting the brightness-based attention feature map and the gradient-based attention feature map into a fusion layer unit of the attention layer for fusion processing to obtain a fused attention feature map; and performing, via an element-wise multiplication unit of the attention layer, element-wise multiplication processing on the fused attention feature map and the first input feature map to obtain the target attention feature map.

To obtain the target attention feature map, after the first input feature map is inputted into the attention layer of the attention residual layer, the first input feature map is first inputted into the processing unit of the attention layer. According to pixel values of pixels in the first input feature map and the pre-stored LBP sampling function, the pixel value of each pixel is inputted into the LBP sampling function to obtain an LBP feature value corresponding to each pixel. According to the LBP feature value of each pixel point and the row and column position where the pixel point is located in the first input feature map, the LBP feature value of each pixel is used as an element value of an element at a corresponding row and column position in the LBP feature value matrix, such that the LBP feature value matrix is obtained and stored in the attention layer.

The first input feature map is inputted into the first perceptron unit of the attention layer to perform the perceptual processing on the first input feature map and obtain the brightness-based attention feature map. The LBP feature value matrix is inputted into the second perceptron unit of the attention layer to perform the perceptual processing on the LBP feature value matrix and obtain the gradient-based attention feature map. The first perceptron unit and the second perceptron unit are multilayered and independent of each other.

The brightness-based attention feature map and the gradient-based attention feature map are inputted into the fusion layer unit of the attention layer for fusion processing, to obtain the fused attention feature map. The fused attention feature map and the first input feature map are inputted into the element-wise multiplication unit of the attention layer for element-wise multiplication processing. Specifically, the pixel value of each pixel point of the target attention feature map is obtained by multiplying a pixel value of a corresponding pixel point of the fused attention feature map with a pixel value of a corresponding pixel point of the first input feature map.

In some embodiments, the attention layer includes the processing unit, the first perceptron unit, the second perceptron unit, the fusion layer unit, and the element-wise multiplication unit.

The processing unit is configured to extract feature values from the first input feature map to obtain the LBP feature value matrix. The input of the processing unit includes the first input feature map, and the output of the processing unit includes the LBP feature value matrix. In some embodiments, the processing unit may comprise a pre-stored LBP sampling function, which receives a pixel value of each pixel point in the first input feature map as input and outputs a corresponding LBP feature value of each pixel point in the first input feature map. For each pixel point in the first input feature map, the processing unit determines a position of the pixel point in the first input feature map and assigns its LBP feature value as an element value in a corresponding position in the LBP feature value matrix to obtain the LBP feature value matrix. In some embodiments, various modes of the LBP sampling function may be adopted, such as original LBP features, circular LBP features, uniform patterns, or the like.

The first perceptron unit is configured to extract the brightness-based attention feature map from the first input feature map. The input of the first perceptron unit includes the first input feature map, and the output of the first perceptron unit includes the brightness-based attention feature map. The first perceptron unit may be a self-attention network such as a non-local network (NLNet).

The second perceptron unit is configured to extract the gradient-based attention feature map from the first input feature map. An input of the second perceptron unit includes the LBP feature value matrix, and an output of the second perceptron unit includes the gradient-based attention feature map. The second perceptron unit may be gradient-weighted class activation mapping (Grad-CAM), or the like.

In some embodiments, the first perceptron unit and the second perceptron unit are multilayered and mutually independent.

The fusion layer unit is configured to perform fusion processing on the brightness-based attention feature map and the gradient-based attention feature map. An input of the fusion layer unit includes the brightness-based attention feature map and the gradient-based attention feature map, and an output of the fusion layer unit includes the fused attention feature map. The fusion layer unit may be a transformer model, or the like.

The element-wise multiplication unit is configured to perform element-wise multiplication processing on the fused attention feature map and the first input feature map, that is, the pixel value of the pixel point in each position of the fused attention feature map is multiplied by the pixel value of the pixel point in the corresponding position of the first input feature map, to obtain the pixel value of the pixel point in the corresponding position of the target attention feature map. The input of the element-wise multiplication unit comprises the first input feature map and the fused attention feature map, and the output of the element-wise multiplication unit comprises the target attention feature map.

In some embodiments of the present disclosure, the pixel value of each pixel point in the first input feature map is input into the LBP sampling function to obtain the LBP feature value matrix, which is stored in the attention layer. The first input feature map is then input into the first perceptron unit of the attention layer to perform perceptual processing and obtain the brightness-based attention feature map. The LBP feature value matrix is input into the second perceptron unit of the attention layer to perform perceptual processing and obtain the gradient-based attention feature map. The fusion processing is performed on the brightness-based attention feature map and the gradient-based attention feature map. Because both brightness and gradient are simultaneously considered when extracting the target attention feature map, the feature information extracted in the target attention feature map is more accurate and comprehensive.

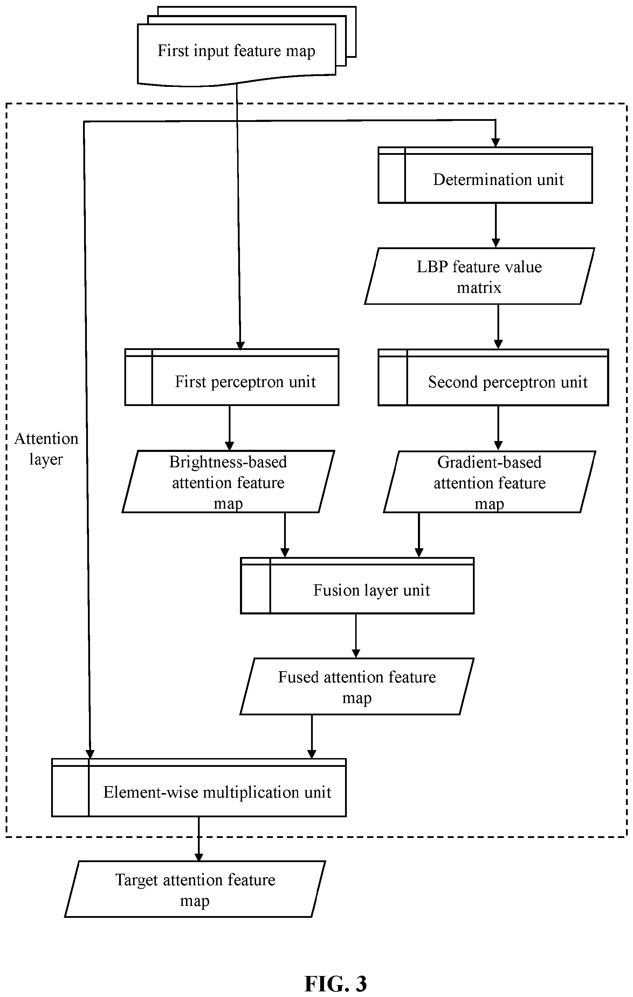

FIG. 3 is a schematic diagram illustrating a process for performing perceptual processing on a first input feature map via an attention layer of a hybrid attention neural network model according to some embodiments of the present disclosure. As shown in FIG. 3, the first input feature map is processed by the first multilayer perceptron and then input into the fusion layer unit. The first input feature map is also processed by the determination unit to obtain the LBP feature value matrix, which is then processed by the second multilayer perceptron and input into the fusion layer unit. The element-wise multiplication processing is performed on the fused attention feature map and the first input feature map to obtain the target attention feature map.

In some embodiments, after obtaining the target image, the electronic device may obtain the LBP feature value matrix based on the target image and the pre-stored LBP sampling function and store the LBP feature value matrix in the attention layer of each attention residual layer.

In one specific embodiment, the perceptual processing process performed by the attention layer on the first input feature map is described as follows. Based on a target image I and an LBP sampling function Fₛ, pixel values of pixels of the target image are input into the LBP sampling function in the processing unit to obtain an LBP feature value matrix Fea_{Lbp}, where Fea_{Lbp} = Fₛ (I) ; The first input feature map and the LBP feature value matrix are respectively input into two independent multilayer perceptrons (i.e., the first perceptron unit and the second perceptron unit) to output a brightness-based attention feature map Att_{Luma} and a gradient-based attention feature map Att_{Lbp}, where Att_{Luma} = MLP_{Luma} (Fea_{Luma}) , Att_{Lbp} = MLP_{Lbpa} (Fea_{Lbp}) , MLP_{Luma} and MLP_{Lbpa} denote the two independent perceptrons, and Fea_{Luma} denotes the first input feature map.

The two attention feature maps are fused in the fusion layer unit to obtain a fused attention feature map Att_{Final}, where Att_{Final} = F_{Fus}(Att_{Lbp} + Att_{Luma}), F_{Fus} denotes the fusion layer unit. The element-wise multiplication processing is performed on the fused attention feature map and the first input feature map to obtain a target attention feature map carrying attention information, F_{Att} = Att_{Final}⊗Fea_{Luma}.

### Embodiment 4:

In order to improve the accuracy of feature extraction, on the basis of the foregoing embodiments, some embodiments of the present disclosure further provide that each attention residual layer further includes a first convolutional layer, a first activation layer, a second convolutional layer, and a second activation layer; and before performing the perceptual processing on the first input feature map via the attention layer of the attention residual layer to obtain the target attention feature map outputted by the attention layer, the method further includes:
processing the first input feature map by performing convolutional processing through the first convolutional layer, performing activation processing through the first activation layer, performing convolutional processing through the second convolutional layer, performing activation processing through the second activation layer to obtain a second input feature map; and inputting the second input feature map into the attention layer of the attention residual layer for a subsequent processing.

In order to improve the accuracy of feature extraction, each attention residual layer further includes the first convolutional layer, the first activation layer, the second convolutional layer, and the second activation layer. After the first input feature map is inputted into the attention residual layer, the convolutional processing is performed on the first input feature map via the first convolutional layer. The activation processing is performed on the feature map after convolution processing via the first activation layer. The convolutional processing is performed on the feature map after activation processing via the second convolutional layer, and subsequently the activation processing is performed on the feature map after convolution processing via the second activation layer to obtain the second input feature map outputted by the second activation layer.

The second input feature map is input into the attention layer of the attention residual layer to perform the perceptual processing to obtain the target attention feature map outputted by the attention layer. An element-wise addition is then performed via the residual addition layer of the attention residual layer on corresponding pixels of the target attention feature map and the first input feature map to obtain the output feature map of the attention residual layer.

The first convolutional layer is configured to perform convolutional processing on the first input feature map. The input of the first convolutional layer includes the first input feature map, and the output of the first convolutional layer includes a first convolutional feature map. The first convolutional layer may be a convolutional neural network (CNN), etc.

The first activation layer is configured to perform activation processing on the first convolutional feature map. The input of the first activation layer includes the first convolutional feature map, and the output of the first activation layer includes a first activation feature map. The first activation layer may be implemented using various activation functions, such as a Sigmoid activation function, a hyperbolic tangent (Tanh) activation function, a Rectified Linear Unit (ReLU) activation function, or the like.

The second convolutional layer is configured to perform convolutional processing on the first activation feature map. The input of the second convolutional layer includes the first activation feature map, and the output of the second convolutional layer includes a second convolutional feature map. The second convolutional layer may be a convolutional neural network (CNN), etc.

The second activation layer is configured to perform activation processing on the second convolutional feature map. The input of the second activation layer includes the second convolutional feature map, and the output of the second activation layer includes the second input feature map. The second activation layer may be implemented by using various activation functions, such as a Sigmoid activation function, a hyperbolic tangent (Tanh) activation function, a Rectified Linear Unit (ReLU) activation function, or the like.

In some embodiments of the present specification, by inputting the second input feature map obtained by processing the first input feature map via two successive combinations of convolutional layers and activation layers into the attention layer for computing and adding attention, the resulting target attention feature map and output feature map can more effectively focus on details in the image, thereby enhancing the ability of detail enhancement.

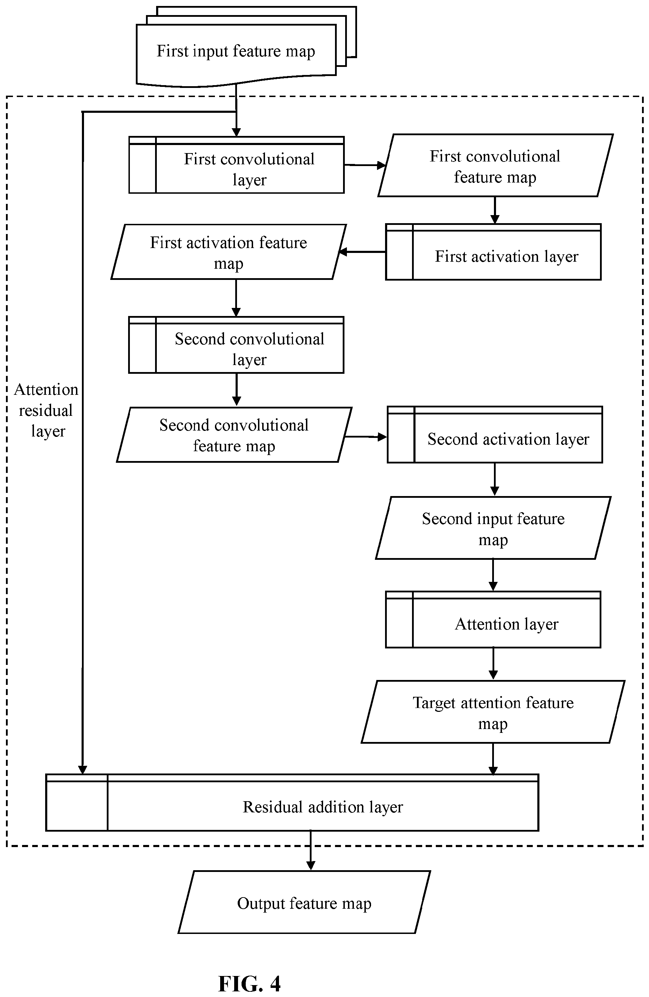

FIG. 4 is a schematic diagram illustrating a process for obtaining an output feature map of an attention residual layer according to some embodiments of the present disclosure. As shown in FIG. 4, the first input feature map is sequentially processed via the first convolutional layer, the first activation layer, the second convolutional layer, and the second activation layer, to obtain the second input feature map. The second input feature map is then input into the attention layer to obtain the target attention feature map. The residual addition processing is performed on the target attention feature map and the first input feature map to obtain the output feature map.

### Embodiment 5:

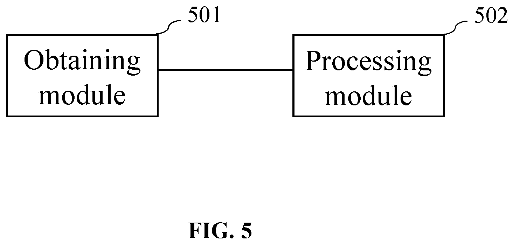

FIG. 5 is a schematic diagram illustrating a structure of an image processing device according to some embodiments of the present disclosure. As shown in FIG. 5, the device s comprises:
an obtaining module 501 configured to obtain a target image to be processed;
a processing module 502 configured to perform, via a convolutional layer of a trained hybrid attention super-resolution network model, convolutional processing on the target image to obtain a shallow feature map; sequentially perform perceptual processing on the shallow feature map via each attention residual layer of a plurality of serially connected attention residual layers in the trained hybrid attention super-resolution network model to obtain a deep feature map output by the last attention residual layer; perform an element-wise addition on corresponding pixels of the shallow feature map and the deep feature map via a target residual addition layer of the hybrid attention super-resolution network model to obtain a target feature map; and obtain a detail-enhanced high-resolution image by inputting the target feature map into an upsampling layer of the hybrid attention super-resolution network model.

Further, the processing module 502 is further configured to for each attention residual layer of the hybrid attention super-resolution network model, in response to determining that the attention residual layer is the first attention residual layer, designate the shallow feature map as a first input feature map of the first attention residual layer and input the first input feature map into the first attention residual layer; or in response to determining that the attention residual layer is not the first attention residual layer, designate an output feature map outputted by a previous attention residual layer as the first input feature map of the attention residual layer and input the first input feature map into the attention residual layer; perform the perceptual processing on the first input feature map via an attention layer of the attention residual layer to obtain a target attention feature map outputted by the attention layer; and perform, via a residual addition layer of the of the attention residual layer, an element-wise addition on corresponding pixels of the target attention feature map and the first input feature map to obtain an output feature map of the attention residual layer, and designate an output feature map of the last attention residual layer as the deep feature map.

Further, the processing module 502 is further configured to via a processing unit of the attention layer of the attention residual layer and based on a pixel value of each pixel point in the first input feature map and a local binary pattern (LBP) sampling function in the attention layer, input the pixel value of each pixel point into the LBP sampling function to obtain a LBP feature value matrix and store the LBP feature value matrix into the attention layer; input the first input feature map into a first perceptron unit of the attention layer for the perceptual processing to obtain a brightness-based attention feature map; input the LBP feature value matrix into a second perceptron unit of the attention layer for the perceptual processing to obtain a gradient-based attention feature map; input the brightness-based attention feature map and the gradient-based attention feature map into a fusion layer unit of the attention layer for fusion processing to obtain a fused attention feature map; and perform, via an element-wise multiplication unit of the attention layer, element-wise multiplication processing on the fused attention feature map and the first input feature map to obtain the target attention feature map.

Further, each attention residual layer further includes a first convolutional layer, a first activation layer, a second convolutional layer, and a second activation layer; and the processing module 502 is further configured to process the first input feature map by performing convolutional processing through the first convolutional layer, perform activation processing through the first activation layer, perform convolutional processing through the second convolutional layer, perform activation processing through the second activation layer to obtain a second input feature map; and input the second input feature map into the attention layer of the attention residual layer for a subsequent processing.

### Embodiment 6:

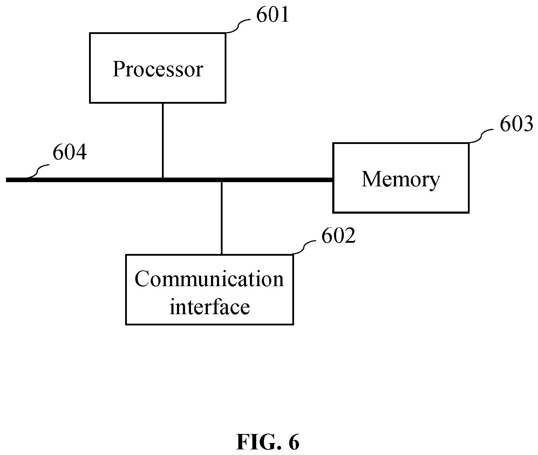

FIG. 6 is a schematic diagram illustrating a structure of an electronic device according to some embodiments of the present disclosure. Based on the foregoing embodiments, the present disclosure further provides an electronic device, as shown in FIG. 6, comprising: a processor 601, a communication interface 602, a memory 603, and a communication bus 604, wherein the processor 601, the communication interface 602, and the memory 603 communicates with each other via the communication bus 604.

The memory 603 is configured to store a computer program, and when the computer program is executed by the processor 601, the processor 601 is caused to perform the following steps:
obtaining a target image to be processed; performing, via a convolutional layer of a trained hybrid attention super-resolution network model, convolutional processing on the target image to obtain a shallow feature map.
sequentially performing perceptual processing on the shallow feature map via each attention residual layer of a plurality of serially connected attention residual layers in the trained hybrid attention super-resolution network model to obtain a deep feature map output by the last attention residual layer; performing an element-wise addition on corresponding pixels of the shallow feature map and the deep feature map via a target residual addition layer of the hybrid attention super-resolution network model to obtain a target feature map; and obtaining a detail-enhanced high-resolution image by inputting the target feature map into an upsampling layer of the hybrid attention super-resolution network model.

Further, the sequentially performing perceptual processing on the shallow feature map via each attention residual layer of a plurality of serially connected attention residual layers in the trained hybrid attention super-resolution network model to obtain a deep feature map output by the last attention residual layer includes:
for each attention residual layer of the hybrid attention super-resolution network model, in response to determining that the attention residual layer is the first attention residual layer, designating the shallow feature map as a first input feature map of the first attention residual layer and inputting the first input feature map into the first attention residual layer; or in response to determining that the attention residual layer is not the first attention residual layer, designating an output feature map outputted by a previous attention residual layer as the first input feature map of the attention residual layer and inputting the first input feature map into the attention residual layer; performing the perceptual processing on the first input feature map via an attention layer of the attention residual layer to obtain a target attention feature map outputted by the attention layer; and performing, via a residual addition layer of the of the attention residual layer, an element-wise addition on corresponding pixels of the target attention feature map and the first input feature map to obtain an output feature map of the attention residual layer, and designating an output feature map of the last attention residual layer as the deep feature map.

Further, the performing the perceptual processing on the first input feature map via an attention layer of the attention residual layer to obtain a target attention feature map of the attention layer includes:
via a processing unit of the attention layer of the attention residual layer and based on a pixel value of each pixel point in the first input feature map and a local binary pattern (LBP) sampling function in the attention layer, inputting the pixel value of each pixel point into the LBP sampling function to obtain a LBP feature value matrix and storing the LBP feature value matrix into the attention layer.
inputting the first input feature map into a first perceptron unit of the attention layer for the perceptual processing to obtain a brightness-based attention feature map; inputting the LBP feature value matrix into a second perceptron unit of the attention layer for the perceptual processing to obtain a gradient-based attention feature map; inputting the brightness-based attention feature map and the gradient-based attention feature map into a fusion layer unit of the attention layer for fusion processing to obtain a fused attention feature map; and performing, via an element-wise multiplication unit of the attention layer, element-wise multiplication processing on the fused attention feature map and the first input feature map to obtain the target attention feature map.

Further, each attention residual layer further includes a first convolutional layer, a first activation layer, a second convolutional layer, and a second activation layer; and before performing the perceptual processing on the first input feature map via an attention layer of the attention residual layer to obtain a target attention feature map outputted by the attention layer, the method further includes:
processing the first input feature map by performing convolutional processing through the first convolutional layer, performing activation processing through the first activation layer, performing convolutional processing through the second convolutional layer, performing activation processing through the second activation layer to obtain a second input feature map; and inputting the second input feature map into the attention layer of the attention residual layer for a subsequent processing.

The communication bus of the electronic device described above may be a Peripheral Component Interconnect (PCI) bus or an Extended Industry Standard Architecture (EISA) bus, among others. The communication bus may be divided into an address bus, a data bus, a control bus, or the like. For ease of illustration, only a single thick line is shown in the figure, which does not imply that there is only one bus or only one type of bus.

The communication interface 602 is configured to facilitate communication between the electronic device and other devices.

The memory may include a Random Access Memory (RAM), and may also include a Non-Volatile Memory (NVM), such as at least one disk storage device. Optionally, the memory may further include at least one storage device located remotely from the above processor.

The processor may be a general-purpose processor, including a Central Processing Unit (CPU), a Network Processor (NP), or the like; or may be a Digital Signal Processor (DSP), an Application Specific Integrated Circuit (ASIC), a Field Programmable Gate Array (FPGA), or other programmable logic device, discrete gate or transistor logic device, or discrete hardware component.

### Embodiment 7:

Based on the foregoing embodiments, the present disclosure further provides a computer-readable storage medium storing a computer program executable by a processor, wherein when the computer program runs on the processor, the processor is caused to perform the following steps:
obtaining a target image to be processed; performing, via a convolutional layer of a trained hybrid attention super-resolution network model, convolutional processing on the target image to obtain a shallow feature map;
sequentially performing perceptual processing on the shallow feature map via each attention residual layer of a plurality of serially connected attention residual layers in the trained hybrid attention super-resolution network model to obtain a deep feature map output by the last attention residual layer; performing an element-wise addition on corresponding pixels of the shallow feature map and the deep feature map via a target residual addition layer of the hybrid attention super-resolution network model to obtain a target feature map; and obtaining a detail-enhanced high-resolution image by inputting the target feature map into an upsampling layer of the hybrid attention super-resolution network model.

Further, the sequentially performing perceptual processing on the shallow feature map via each attention residual layer of a plurality of serially connected attention residual layers in the trained hybrid attention super-resolution network model to obtain a deep feature map output by the last attention residual layer includes:
For each attention residual layer of the hybrid attention super-resolution network model, in response to determining that the attention residual layer is the first attention residual layer, designating the shallow feature map as a first input feature map of the first attention residual layer and inputting the first input feature map into the first attention residual layer; or in response to determining that the attention residual layer is not the first attention residual layer, designating an output feature map outputted by a previous attention residual layer as the first input feature map of the attention residual layer and inputting the first input feature map into the attention residual layer; performing the perceptual processing on the first input feature map via an attention layer of the attention residual layer to obtain a target attention feature map outputted by the attention layer; and performing, via a residual addition layer of the of the attention residual layer, an element-wise addition on corresponding pixels of the target attention feature map and the first input feature map to obtain an output feature map of the attention residual layer, and designating an output feature map of the last attention residual layer as the deep feature map.

Further, the performing the perceptual processing on the first input feature map via an attention layer of the attention residual layer to obtain a target attention feature map of the attention layer includes:
Via a processing unit of the attention layer of the attention residual layer and based on a pixel value of each pixel point in the first input feature map and a local binary pattern (LBP) sampling function in the attention layer, inputting the pixel value of each pixel point into the LBP sampling function to obtain a LBP feature value matrix and storing the LBP feature value matrix into the attention layer;
Inputting the first input feature map into a first perceptron unit of the attention layer for the perceptual processing to obtain a brightness-based attention feature map; inputting the LBP feature value matrix into a second perceptron unit of the attention layer for the perceptual processing to obtain a gradient-based attention feature map; inputting the brightness-based attention feature map and the gradient-based attention feature map into a fusion layer unit of the attention layer for fusion processing to obtain a fused attention feature map; and performing, via an element-wise multiplication unit of the attention layer, element-wise multiplication processing on the fused attention feature map and the first input feature map to obtain the target attention feature map.

Further, each attention residual layer further includes a first convolutional layer, a first activation layer, a second convolutional layer, and a second activation layer; and before performing the perceptual processing on the first input feature map via an attention layer of the attention residual layer to obtain a target attention feature map outputted by the attention layer, the method further includes:
Processing the first input feature map by performing convolutional processing through the first convolutional layer, performing activation processing through the first activation layer, performing convolutional processing through the second convolutional layer, performing activation processing through the second activation layer to obtain a second input feature map; and inputting the second input feature map into the attention layer of the attention residual layer for a subsequent processing.

Those skilled in the art should understand that embodiments of the present disclosure may be provided as a method, a system, or a computer program product. Therefore, the present disclosure may take the form of an entirely hardware embodiment, an entirely software embodiment, or an embodiment combining software and hardware aspects. Furthermore, the present disclosure may take the form of a computer program product implemented on one or more computer-readable storage media containing computer-usable program code, including but not limited to magnetic disk storage, CD-ROM, optical storage, or the like.

The present disclosure is described with reference to flowcharts and/or block diagrams of the method, apparatus (system), and computer program product according to embodiments of the present disclosure. It should be understood that each process and/or block in the flowcharts and/or block diagrams, as well as combinations of processes and/or blocks in the flowcharts and/or block diagrams, may be implemented by computer program instructions. These computer program instructions may be provided to a processor of a general-purpose computer, special-purpose computer, embedded processor, or other programmable data processing apparatus to produce a machine such that instructions executed by the processor of the computer or other programmable data processing apparatus produce a device configured to implement functions specified in one or more processes of the flowcharts and/or blocks of the block diagrams.

These computer program instructions may also be stored in a computer-readable storage medium that can direct a computer or other programmable data processing apparatus to function in a particular manner such that the instructions stored in the computer-readable storage medium produce a manufactured article including instruction means configured to implement functions specified in one or more processes of the flowcharts and/or blocks of the block diagrams.

These computer program instructions may also be loaded into a computer or other programmable data processing apparatus such that a series of operational steps are performed on the computer or other programmable apparatus to produce a computer-implemented process, whereby instructions executed on the computer or other programmable apparatus provide operations configured to implement functions specified in one or more processes of the flowcharts and/or blocks of the block diagrams.

Obviously, those skilled in the art may make various modifications and variations to the present disclosure without departing from the spirit and scope of the present disclosure. Therefore, the present disclosure intends to include these modifications and variations within the scope of the claims and their equivalents.

## Claims

1. An image processing method, wherein the method comprises:
obtaining a target image to be processed;
performing, via a convolutional layer of a trained hybrid attention super-resolution network model, convolutional processing on the target image to obtain a shallow feature map;
sequentially performing perceptual processing on the shallow feature map via each attention residual layer of a plurality of serially connected attention residual layers in the trained hybrid attention super-resolution network model to obtain a deep feature map output by the last attention residual layer;
performing an element-wise addition on corresponding pixels of the shallow feature map and the deep feature map via a target residual addition layer of the hybrid attention super-resolution network model to obtain a target feature map; and
obtaining a detail-enhanced high-resolution image by inputting the target feature map into an upsampling layer of the hybrid attention super-resolution network model.

2. The method of claim 1, wherein the sequentially performing perceptual processing on the shallow feature map via each attention residual layer of a plurality of serially connected attention residual layers in the trained hybrid attention super-resolution network model to obtain a deep feature map output by the last attention residual layer includes:
for each attention residual layer of the hybrid attention super-resolution network model,
in response to determining that the attention residual layer is the first attention residual layer, designating the shallow feature map as a first input feature map of the first attention residual layer and inputting the first input feature map into the first attention residual layer; or in response to determining that the attention residual layer is not the first attention residual layer, designating an output feature map outputted by a previous attention residual layer as the first input feature map of the attention residual layer and inputting the first input feature map into the attention residual layer;
performing the perceptual processing on the first input feature map via an attention layer of the attention residual layer to obtain a target attention feature map outputted by the attention layer; and
performing, via a residual addition layer of the of the attention residual layer, an element-wise addition on corresponding pixels of the target attention feature map and the first input feature map to obtain an output feature map of the attention residual layer, and
designating an output feature map of the last attention residual layer as the deep feature map.

3. The method of claim 2, wherein the performing the perceptual processing on the first input feature map via an attention layer of the attention residual layer to obtain a target attention feature map output by the attention layer includes:
via a processing unit of the attention layer of the attention residual layer and based on a pixel value of each pixel point in the first input feature map and a local binary pattern (LBP) sampling function in the attention layer, inputting the pixel value of each pixel point into the LBP sampling function to obtain a LBP feature value matrix and storing the LBP feature value matrix into the attention layer;
inputting the first input feature map into a first perceptron unit of the attention layer for the perceptual processing to obtain a brightness-based attention feature map;
inputting the LBP feature value matrix into a second perceptron unit of the attention layer for the perceptual processing to obtain a gradient-based attention feature map;
inputting the brightness-based attention feature map and the gradient-based attention feature map into a fusion layer unit of the attention layer for fusion processing to obtain a fused attention feature map; and
performing, via an element-wise multiplication unit of the attention layer, element-wise multiplication processing on the fused attention feature map and the first input feature map to obtain the target attention feature map.

4. The method of claim 2, wherein
each attention residual layer further includes a first convolutional layer, a first activation layer, a second convolutional layer, and a second activation layer; and
before performing the perceptual processing on the first input feature map via an attention layer of the attention residual layer to obtain a target attention feature map outputted by the attention layer, the method further includes:
processing the first input feature map by performing convolutional processing through the first convolutional layer, performing activation processing through the first activation layer, performing convolutional processing through the second convolutional layer, performing activation processing through the second activation layer to obtain a second input feature map; and
inputting the second input feature map into the attention layer of the attention residual layer for a subsequent processing.

5. An image processing device, wherein the device comprises:
an obtaining module configured to obtain a target image to be processed;
a processing module configured to:
perform, via a convolutional layer of a trained hybrid attention super-resolution network model, convolutional processing on the target image to obtain a shallow feature map;
sequentially perform perceptual processing on the shallow feature map via each attention residual layer of a plurality of serially connected attention residual layers in the trained hybrid attention super-resolution network model to obtain a deep feature map output by the last attention residual layer;
perform an element-wise addition on corresponding pixels of the shallow feature map and the deep feature map via a target residual addition layer of the hybrid attention super-resolution network model to obtain a target feature map; and
obtain a detail-enhanced high-resolution image by inputting the target feature map into an upsampling layer of the hybrid attention super-resolution network model.

6. The device of claim 5, wherein the processing module is further configured to:
for each attention residual layer of the hybrid attention super-resolution network model,
in response to determining that the attention residual layer is the first attention residual layer, designate the shallow feature map as a first input feature map of the first attention residual layer and input the first input feature map into the first attention residual layer; or in response to determining that the attention residual layer is not the first attention residual layer, designate an output feature map outputted by a previous attention residual layer as the first input feature map of the attention residual layer and input the first input feature map into the attention residual layer;
perform the perceptual processing on the first input feature map via an attention layer of the attention residual layer to obtain a target attention feature map outputted by the attention layer; and
perform, via a residual addition layer of the of the attention residual layer, an element-wise addition on corresponding pixels of the target attention feature map and the first input feature map to obtain an output feature map of the attention residual layer, and
designate an output feature map of the last attention residual layer as the deep feature map.

7. The device of claim 5, wherein the processing module is further configured to:
via a processing unit of the attention layer of the attention residual layer and based on a pixel value of each pixel point in the first input feature map and a local binary pattern (LBP) sampling function in the attention layer, input the pixel value of each pixel point into the LBP sampling function to obtain a LBP feature value matrix and store the LBP feature value matrix into the attention layer;
input the first input feature map into a first perceptron unit of the attention layer for the perceptual processing to obtain a brightness-based attention feature map;
input the LBP feature value matrix into a second perceptron unit of the attention layer for the perceptual processing to obtain a gradient-based attention feature map;
input the brightness-based attention feature map and the gradient-based attention feature map into a fusion layer unit of the attention layer for fusion processing to obtain a fused attention feature map; and
perform, via an element-wise multiplication unit of the attention layer, element-wise multiplication processing on the fused attention feature map and the first input feature map to obtain the target attention feature map.

8. The device of claim 5, wherein
each attention residual layer further includes a first convolutional layer, a first activation layer, a second convolutional layer, and a second activation layer; and
the processing module is further configured to:
process the first input feature map by performing convolutional processing through the first convolutional layer, perform activation processing through the first activation layer, perform convolutional processing through the second convolutional layer, perform activation processing through the second activation layer to obtain a second input feature map; and
input the second input feature map into the attention layer of the attention residual layer for a subsequent processing.

9. An electronic device comprising a processor, a communication interface, a memory, and a communication bus, wherein the processor, the communication interface, and the memory accomplish communication with each other via the communication bus; and
a computer program is stored in the memory, and when the computer program is executed by the processor, causes the processor to execute the image processing method of any one of claims 1-4.

10. A computer-readable storage medium storing a computer program executable by a processor, wherein when the computer program runs on the processor, causes the processor to execute the image processing method of any one of claims 1-4.
